# EUROPEAN PATENT SPECIFICATION

(11) **EP 4 104 685 B1**
(45) Date of publication and mention of the grant of the patent: **30.10.2024**
(21) Application number: 21179555.4
(22) Date of filing: 15.06.2021
(51) Int. Cl.: A23J 1/14, A23L 33/105, A23J 1/00

(54) **MULTIPLE PRODUCTS FROM BRASSICA**
MEHRERE PRODUKTE AUS BRASSICA
PRODUITS MULTIPLES ISSUS DE BRASSICA

(43) Date of publication of application: 21.12.2022
(73) Proprietor: Biorefinery Royalties B.V., 6598 AT Heijen (NL)
(72) Inventor: ZWART, Lourens, 7255 BW Hengelo (NL); DERKSEN, Johannes Theodorus Petrus, Heijen 6598 AT (NL)
(74) Representative: V.O.

(56) References cited:
- CN-A- 106 880 057
- US-A1- 2011 287 477
- TZENG Y-M ET AL: "Production of canola protein materials by alkaline extraction, precipitation, and membrane processing", JOURNAL OF FOOD SCIENCE, WILEY-BLACKWELL PUBLISHING, INC, US, vol. 55, no. 4, 1 January 1990 (1990-01-01), pages 1147, XP002230721, ISSN: 0022-1147, DOI: 10.1111/J.1365-2621.1990.TB01619.X
- NILNAKARA S ET AL: "Production of antioxidant dietary fibre powder from cabbage outer leaves", FOOD AND BIOPRODUCTS PROCESSING, INSTITUTION OF CHEMICAL ENGINEERS, RUGBY, GB, vol. 87, no. 4, 1 December 2009 (2009-12-01), pages 301 - 307, XP026770081, ISSN: 0960-3085, [retrieved on 20090218], DOI: 10.1016/J.FBP.2008.12.004
- PARK SEO YEON ET AL: "Enzymatic production of soluble dietary fiber from the cellulose fraction of Chinese cabbage waste and potential use as a functional food source", FOOD SCIENCE AND BIOTECHNOLOGY, THE KOREA SOC. OF FOOD SCIENCE AND TECHNOLOGY, HEIDELBERG, vol. 24, no. 2, 30 April 2015 (2015-04-30), pages 529 - 535, XP035474138, ISSN: 1226-7708, [retrieved on 20150430], DOI: 10.1007/S10068-015-0069-0

## Description

### Field of the Invention

The invention is in the field of producing one or more products selected from the group consisting of a fibre-containing composition, a digestible-carbohydrate-rich composition, and a protein-rich composition, from biomaterial of a plant of the species *Brassica oleracea,* such as white cabbage. Particularly, the invention pertains to recovering fibre fractions with useful functional properties from such biomaterial.

### Background of the Invention

Plants of the species *Brassica oleracea,* such as cabbages, are often used in food; in many cases in processed form. Industrial processing of such plants to food products frequently results in residual streams comprising biomaterial of these plants, such as their leaves. Much of these residual streams are typically wasted or discarded, while they still contain useful and valuable components such as dietary fibre, digestible carbohydrates, and protein. These components can be used for food and feed applications.

Therefore, it is desired to provide products made from said biomaterial, for example fibre-rich compositions, digestible-carbohydrate-rich compositions, and/or protein-rich compositions.

A background reference in this respect is A.K. Surbhi and P. Dhurve, International Journal of Current Research 2017, volume 9, issue 6, pages 52457-52463. Therein, white cabbage outer leaves were blanched and dried to yield a dietary fibre powder. However, this process yields a product containing dietary fibre in an amount of only 21-35 wt%, while digestible carbohydrates and protein are present in undesired high amounts of from 35-45 wt% and 20-22 wt%, respectively.

Further background references include Tzeng et al., Journal of Food Science 1990, volume 55, issue 4, page 1147; US 2011/287477 A1; Nilnakara et al., Food and Bioproducts Processing 2009, volume 87, issue 4, pages 301-307; Park et al., Food Science and Biotechnology 2015, volume 24, issue 2, pages 529-535; and CN 106880057A.

It is a desire to provide compositions obtainable from biomaterial of a plant from the species *Brassica oleracea* that are rich in dietary fibre, but contain low amounts of other components such as digestible carbohydrates and protein. Furthermore, it is a desire to provide compositions obtainable from biomaterial of a plant from the species *Brassica oleracea* that are rich in digestible carbohydrates, preferably sugar, but preferably contain low amounts of other components such as dietary fibre and protein. Additionally, it is a desire to provide compositions obtainable from biomaterial of a plant from the species *Brassica oleracea* that are rich in protein, but preferably contain low amounts of other components such as dietary fibre and digestible carbohydrates. It is also a desire to provide a process for making such compositions. In particular, it is desired that such a process be provided that can be readily carried out, and/or is economical.

### Summary of the Invention

In order to better address one or more of the foregoing desires, the invention provides, in one aspect a fibre-containing composition obtainable from biomaterial of a plant of the species *Brassica oleracea* by a process comprising the steps of:
(a) providing said biomaterial;
(b) preparing an aqueous slurry having a pH in a range of from 7.5 to 8.5 from said biomaterial; and
(c) subjecting the aqueous slurry to separation so as to obtain a liquid fraction and a solid fraction;

wherein the solid fraction is said fibre-containing composition;
wherein said steps (b) and (c) are carried out at a temperature in a range of from 0°C to 20°C; wherein the biomaterial essentially consists of leaves;
wherein said fibre-containing composition comprises at most 30 wt% of protein; and wherein said protein is in its native form.

In another aspect, the invention presents the use of a composition of the invention in feed or food.

In yet another aspect, the invention presents a process for the preparation of one or more products from biomaterial of a plant of the species *Brassica oleracea,* wherein said one or more products are selected from the group consisting of a fibre-containing composition, a digestible-carbohydrate-containing composition, and a protein-containing composition, wherein protein in said one or more products is in its native form; wherein said process comprises the steps of:
(a) providing said biomaterial; wherein the biomaterial essentially consists of leaves;
(b) preparing an aqueous slurry having a pH in a range of from 7.5 to 8.5 from said biomaterial; and
(c) subjecting the aqueous slurry to separation so as to obtain a liquid fraction and a solid fraction; wherein the solid fraction is a fibre-containing composition;
wherein said steps (b) and (c) are carried out at a temperature in a range of from 0°C to 20°C;and wherein the process optionally further comprises the steps of
(d) subjecting the solid fraction obtained in step (c) to one or more additional washing steps so as to obtain one or more liquid fractions and a solid fraction, wherein the solid fraction is a fibre-containing composition, and the one or more liquid fractions are digestible-carbohydrate-containing compositions;
(e) subjecting the liquid fraction obtained in step (c), the one or more liquid fractions obtained in step (d), and/or combinations thereof, to acidification so as to obtain an acid-treated liquid;
(f) subjecting the acid-treated liquid obtained in step (e) to separation so as to obtain an aqueous process liquid and a liquid gel, wherein the aqueous process liquid is a digestible-carbohydrate-containing composition and the liquid gel is a protein-containing composition;
(g) removing salt ions from the aqueous process liquid obtained in step
(f) so as to obtain a low-salt aqueous process liquid; wherein the low-salt aqueous process liquid is a digestible-carbohydrate-containing composition; and/or
(h) subjecting the fibre-containing composition, the digestible-carbohydrate-containing composition, and/or the protein-containing composition to one or more concentration and/or drying steps so as to obtain one or more dry products.

In another aspect, the invention provides a protein-containing composition obtainable from biomaterial of a plant of the species *Brassica oleracea* by the process according to the invention, wherein said process comprises steps (a)-(c), (e), and (f), and preferably step (h), wherein the protein-containing composition is subjected to one or more concentration and/or drying steps;
wherein the biomaterial essentially consists of leaves; and
wherein the protein in the protein-containing composition is in its native form.

In another aspect, the invention provides a digestible-carbohydrate-containing composition obtainable from biomaterial of a plant of the species *Brassica oleracea* by the process of the invention, wherein said process comprises steps (a)-(c), and said process further comprises step (d), and/or steps (e) and (f);
wherein preferably said process further comprises step (g),
wherein preferably said process further comprises step (h), wherein the digestible-carbohydrate-containing composition is subjected to one or more concentration and/or drying steps;
wherein the biomaterial essentially consists of leaves;
wherein the digestible-carbohydrate-containing composition comprises at most 30 wt% of protein; and wherein the protein is in its native form.

### Detailed description of the Invention

In a general sense, the invention is based on the judicious insight to subject the biomaterial of a plant of the species *Brassica oleracea* to a process wherein an aqueous slurry having a pH of from 7.5 to 8.5 is prepared, and the aqueous slurry is then subjected to separation so as to obtain a liquid fraction and a solid fraction. Advantageously, this procedure leads to a product that is rich in dietary fibre, but contains low amounts of other components such as digestible carbohydrates and protein. In addition, optionally by including other steps as described herein, other valuable products such as a digestible-carbohydrate-rich composition and/or a protein-rich composition can be obtained as well.

Furthermore, the process of the invention can be readily carried out, and is economical.

### Definitions

Herein, all terms are used in their normal scientific meaning, unless indicated otherwise. Below, the present invention will be further described with respect to particular embodiments but the invention is not limited thereto but only by the claims. Where an indefinite or definite article is used when referring to a singular noun e.g. "a" or "an", "the", this includes a plural of that noun unless something else is specifically stated. The verb "to comprise", and its conjugations, as used in this description and in the claims is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there is one and only one of the elements. The indefinite article "a" or "an" thus usually means "at least one".

As used herein, "dietary fibre" refers to plant compounds that are not broken down by human digestive enzymes. Such compounds are well-known in the art. Preferably, the dietary fibre is water-insoluble fibre. Examples of water-insoluble fibres include, but are not limited to, cellulose, chitin, lignin, xanthan gum, resistant starch, and the like. By contrast, examples of water-soluble fibres include, but are not limited to, arabinoxylan, fructans, polyuronides (pectin and alginates), raffinose, polydextrose, inulin, and the like. It will be understood that herein "fibre" without adjective refers to "dietary fibre" unless stated otherwise. In addition, it will be understood that "fibre" and "fiber" can be used interchangeably.

As used herein, "digestible carbohydrates" are carbohydrates that are broken down by human digestive enzymes. Such digestible carbohydrates are well-known in the art, and include, but are not limited to, starch and sugar. Preferably, the digestible carbohydrates are water-soluble.

As used herein, "sugar" refers to monosaccharides, disaccharides, and oligosaccharides. Examples of monosaccharides include fructose, galactose, glucose, and the like. Examples of disaccharides include, but are not limited to, lactose, maltose, sucrose, trehalose, cellobiose, chitobiose, and the like. Oligosaccharides are saccharide polymers containing a small number, preferably of from 3 to 10, of monosaccharide units.

As used herein, "water-soluble" means that the compound can be dissolved in water of pH 7 at 25 °C to a concentration of more than 0.1 g per 100 mL.

As used herein, "water-insoluble" means that the compound cannot be dissolved in water of pH 7 at 25 °C to a concentration of more than 0.1 g per 100 mL.

Unless indicated otherwise, all weight percentages (wt%) used herein relate to the weight as compared to the dry weight of the composition.

It will be understood that herein, the term "fibre-rich composition" denotes the fibre-containing composition of the invention. The term "fibre-rich composition" does not relate to the protein-rich composition, nor the digestible-carbohydrate-rich composition of the invention.

Likewise, it will be understood that herein, the term "digestible-carbohydrate-rich composition" denotes the digestible-carbohydrate-containing composition of the invention. The term "digestible-carbohydrate-rich composition" does not relate to the protein-rich composition, nor the fibre-rich composition of the invention.

Likewise, it will be understood that herein, the term "protein-rich composition" denotes the protein-containing composition of the invention. The term "protein-rich composition" does not relate to the digestible-carbohydrate-rich composition, nor the fibre-rich composition of the invention.

### Fibre compositions

In one aspect, the invention relates to a fibre-containing composition obtainable from biomaterial of a plant of the species *Brassica oleracea* by a process of the invention as disclosed herein, preferably a process for the preparation of a fibre-containing composition as disclosed herein.

Typically, the fibre-rich compositions of the invention may comprise other components, such as ash, lipids (fats), and small molecular weight compounds, such as vitamins, antioxidants, flavours, peptides, and amino acids.

Preferably, the fibre-containing compositions of the invention comprise at least 40 wt% of dietary fibre.

Preferably, the fibre-rich compositions of the invention comprise at least 42 wt% of dietary fibre, more preferably at least 45 wt% of dietary fibre, more preferably at least 47 wt% of dietary fibre, even more preferably at least 50 wt% of dietary fibre, more preferably still at least 52 wt% of dietary fibre, and most preferably at least 55 wt% of dietary fibre. In other preferred embodiments, the fibre-rich compositions of the invention comprise at least 60 wt% of dietary fibre, at least 65 wt% of dietary fibre, at least 70 wt% of dietary fibre, or even at least 75 wt% of dietary fibre.

Preferably, the fibre-rich compositions of the invention comprise at most 95 wt% of dietary fibre, more preferably at most 90 wt% of dietary fibre, more preferably at most 85 wt% of dietary fibre, even more preferably at most 80 wt% of dietary fibre, more preferably still at most 75 wt% of dietary fibre, and most preferably at most 65 wt% of dietary fibre. In other preferred embodiments, the fibre-rich compositions of the invention comprise at most 60 wt% of dietary fibre, at most 55 wt% of dietary fibre, at most 50 wt% of dietary fibre, or even at most 45 wt% of dietary fibre.

In preferred embodiments, the fibre-rich compositions of the invention comprise dietary fibre in an amount of from 40 wt% to 95 wt%, more preferably of from 42 wt% to 92 wt%, even more preferably of from 45 wt% to 90 wt%, more preferably still of from 47 wt% to 87 wt%, yet more preferably of from 50 wt% to 85 wt%, more preferably still of from 52 wt% to 82 wt%, and most preferably of from 55 wt% to 80 wt%.

Preferably, the fibre-rich compositions of the invention comprise at most 30 wt% of digestible carbohydrates, preferably at most 27 wt% of digestible carbohydrates, more preferably at most 25 wt% of digestible carbohydrates, more preferably at most 22 wt% of digestible carbohydrates, even more preferably at most 20 wt% of digestible carbohydrates, and more preferably still at most 19 wt% of digestible carbohydrates, more preferably at most 18 wt% of digestible carbohydrates, more preferably at most 15 wt% of digestible carbohydrates, and most preferably at most 10 wt% of digestible carbohydrates.

Preferably, the fibre-rich compositions of the invention comprise at least 0.01 wt% of digestible carbohydrates, preferably at least 0.1 wt% of digestible carbohydrates, more preferably at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, at least 15 wt%, at least 16 wt%, at least 17 wt%, at least 18 wt%, at least 19 wt%, at least 20 wt%, at least 21 wt%, at least 22 wt%, at least 23 wt%, at least 24 wt%, or at least 25 wt% of digestible carbohydrates.

In preferred embodiments, the fibre-rich compositions of the invention comprise digestible carbohydrates in an amount of from 0.5 wt% to 30 wt%, more preferably of from 1 wt% to 27 wt%, even more preferably of from 5 wt% to 25 wt%, more preferably still of from 7 wt% to 22 wt%, yet more preferably of from 8 wt% to 20 wt%, more preferably still of from 10 wt% to 19 wt%, and most preferably of from 11 wt% to 18 wt%.

Preferably, the fibre-rich compositions of the invention comprise at most 30 wt% of sugar, preferably at most 25 wt% of sugar, more preferably at most 20 wt% of sugar, more preferably at most 15 wt% of sugar, more preferably at most 12 wt% of sugar, more preferably at most 11 wt% of sugar, more preferably at most 10 wt% of sugar, even more preferably at most 9 wt% of sugar, and more preferably still at most 8 wt% of sugar, or at most 7 wt% of sugar, at most 6 wt% of sugar, and most preferably at most 5 wt% of sugar.

Preferably, the fibre-rich compositions of the invention comprise at least 0.01 wt% of sugar, preferably at least 0.1 wt% of sugar, more preferably at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, at least 15 wt%, at least 16 wt%, at least 17 wt%, at least 18 wt%, at least 19 wt%, at least 20 wt%, at least 21 wt%, at least 22 wt%, at least 23 wt%, at least 24 wt%, or at least 25 wt% of sugar.

In preferred embodiments, the fibre-rich compositions of the invention comprise sugar in an amount of from 0.5 wt% to 15 wt%, more preferably of from 1 wt% to 12 wt%, even more preferably of from 2 wt% to 11 wt%, more preferably still of from 3 wt% to 10 wt%, yet more preferably of from 4 wt% to 9 wt%, more preferably still of from 5 wt% to 8.5 wt%, and most preferably of from 6 wt% to 8 wt%.

The fibre-rich compositions of the invention comprise at most 30 wt% of protein, preferably at most 25 wt% of protein, more preferably at most 20 wt% of protein, more preferably at most 19 wt% of protein, more preferably at most 15 wt% of protein, more preferably at most 14 wt% of protein, more preferably at most 13 wt% of protein, even more preferably at most 12 wt% of protein, and more preferably still at most 11 wt% of protein, and most preferably at most 10 wt% of protein.

Preferably, the fibre-rich compositions of the invention comprise at least 0.01 wt% of protein, preferably at least 0.1 wt% of protein, more preferably at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, at least 15 wt%, at least 16 wt%, at least 17 wt%, at least 18 wt%, at least 19 wt%, at least 20 wt%, at least 21 wt%, at least 22 wt%, at least 23 wt%, at least 24 wt%, or at least 25 wt% of protein.

In preferred embodiments, the fibre-rich compositions of the invention comprise protein in an amount of from 0.5 wt% to 19 wt%, more preferably of from 1 wt% to 15 wt%, even more preferably of from 2 wt% to 13 wt%, more preferably still of from 3 wt% to 12 wt%, yet more preferably of from 4 wt% to 11 wt%, more preferably still of from 5 wt% to 10 wt%, and most preferably of from 6 wt% to 9.5 wt%.

Preferably, the fibre-rich compositions of the invention comprise at most 2 wt% of fat, preferably at most 1.5 wt% of fat, more preferably at most 1.4 wt% of fat, more preferably at most 1.3 wt% of fat, even more preferably at most 1.2 wt% of fat, and more preferably still at most 1.1 wt% of fat, and most preferably at most 1.0 wt% of fat.

Preferably, the fibre-rich compositions of the invention comprise at least 0.01 wt% of fat, preferably at least 0.05 wt% of fat, more preferably at least 0.1 wt%, at least 0.2 wt%, at least 0.3 wt%, at least 0.4 wt%, at least 0.5 wt%, at least 0.6 wt%, at least 0.7 wt%, at least 0.8 wt%, or at least 0.9 wt% of fat.

In preferred embodiments, the fibre-rich compositions of the invention comprise fat in an amount of from 0.2 wt% to 2 wt%, more preferably of from 0.3 wt% to 1.5 wt%, even more preferably of from 0.4 wt% to 1.4 wt%, more preferably still of from 0.5 wt% to 1.3 wt%, yet more preferably of from 0.6 wt% to 1.2 wt%, more preferably still of from 0.7 wt% to 1.1 wt%, and most preferably of from 0.8 wt% to 1.0 wt%.

Preferably, the solids content of the fibre-rich compositions of the invention is at least 50 wt%, more preferably at least 60 wt%, more preferably at least 70 wt%, more preferably at least 75 wt%, even more preferably at least 80 wt%, more preferably at least 85 wt%, more preferably at least 90 wt%, more preferably at least 95 wt%, more preferably at least 97 wt%, and most preferably at least 99 wt%, wherein the wt% is as compared to the total weight of the composition including fluids.

Preferably, the moisture content of the fibre-rich compositions of the invention is at most 15 wt%, preferably at most 10 wt%, more preferably at most 5 wt%, more preferably at most 4 wt%, even more preferably at most 3 wt%, more preferably still at most 2 wt%, and most preferably at most 1 wt%, wherein the wt% is as compared to the total weight of the composition including fluids. In preferred embodiments, the fibre-rich compositions of the invention are dry powders.

### Protein-rich compositions

In one aspect, the invention relates to a protein-containing composition obtainable from biomaterial of a plant of the species *Brassica oleracea* by a process of the invention as disclosed herein, preferably a process for the preparation of a protein-containing composition as disclosed herein.

Typically, the protein-rich compositions of the invention may comprise other components, such as ash, lipids (fats), and small molecular weight compounds, such as vitamins, antioxidants, flavours, peptides, and amino acids.

Preferably, the protein-rich compositions of the invention comprise at least 10 wt% of protein, preferably at least 12 wt% of protein, more preferably at least 15 wt%, at least 16 wt%, at least 17 wt%, at least 18 wt%, at least 19 wt%, at least 20 wt%, at least 21 wt%, at least 22 wt%, at least 23 wt%, at least 24 wt%, at least 25 wt%, at least 26 wt%, at least 27 wt%, at least 28 wt%, at least 29 wt%, at least 30 wt%, at least 31 wt%, at least 32 wt%, at least 33 wt%, at least 34 wt%, at least 35 wt%, at least 36 wt%, at least 37 wt%, at least 38 wt%, at least 39 wt%, at least 40 wt%, at least 41 wt%, at least 42 wt%, at least 43 wt%, at least 44 wt%, at least 45 wt%, at least 46 wt%, at least 47 wt%, at least 48 wt%, at least 49 wt%, at least 50 wt%, at least 51 wt%, at least 52 wt%, at least 53 wt%, at least 54 wt%, at least 55 wt%, at least 56 wt%, at least 57 wt%, at least 58 wt%, at least 59 wt%, at least 60 wt%, at least 61 wt%, at least 62 wt%, at least 63 wt%, at least 64 wt%, at least 65 wt%, at least 66 wt%, at least 67 wt%, at least 68 wt%, at least 69 wt%, or at least 70 wt% of protein.

Preferably, the protein-rich compositions of the invention comprise at most 90 wt% of protein, preferably at most 89 wt% of protein, more preferably at most 88 wt%, at most 87 wt%, at most 86 wt%, at most 85 wt%, at most 84 wt%, at most 83 wt%, at most 82 wt%, at most 81 wt%, at most 80 wt%, at most 79 wt% of protein, at most 78 wt%, at most 77 wt%, at most 76 wt%, at most 75 wt%, at most 74 wt%, at most 73 wt%, at most 72 wt%, at most 71 wt%, at most 70 wt%, at most 69 wt%, more preferably at most 68 wt%, at most 67 wt%, at most 66 wt%, at most 65 wt%, at most 64 wt%, at most 63 wt%, at most 62 wt%, at most 61 wt%, at most 60 wt%, at most 59 wt%, at most 58 wt%, at most 57 wt%, at most 56 wt%, at most 55 wt%, at most 54 wt%, at most 53 wt%, at most 52 wt%, at most 51 wt%, at most 50 wt%, at most 49 wt%, at most 48 wt%, at most 47 wt%, at most 46 wt%, at most 45 wt%, at most 44 wt%, at most 43 wt%, at most 42 wt%, at most 41 wt%, at most 40 wt%, at most 39 wt%, at most 38 wt%, at most 37 wt%, at most 36 wt%, at most 35 wt%, at most 34 wt%, at most 33 wt%, at most 32 wt%, at most 31 wt%, at most 30 wt%, at most 29 wt%, at most 28 wt%, at most 27 wt%, at most 26 wt%, at most 25 wt%, at most 24 wt%, at most 23 wt%, at most 22 wt%, at most 21 wt%, or at most 20 wt% of protein.

In preferred embodiments, the protein-rich compositions of the invention comprise protein in an amount of from 10 wt% to 80 wt%, more preferably of from 12 wt% to 60 wt%, even more preferably of from 15 wt% to 50 wt%, more preferably still of from 20 wt% to 45 wt%, yet more preferably of from 25 wt% to 42 wt%, more preferably still of from 30 wt% to 40 wt%, and most preferably of from 35 wt% to 39 wt%.

Preferably, the protein-rich compositions of the invention comprise at most 40 wt% of dietary fibre, more preferably at most 30 wt% of dietary fibre, more preferably at most 25 wt% of dietary fibre, even more preferably at most 22 wt% of dietary fibre, more preferably still at most 20 wt% of dietary fibre, more preferably at most 15 wt% of dietary fibre, more preferably at most 10 wt% of dietary fibre, and most preferably at most 5 wt% of dietary fibre.

Preferably, the protein-rich compositions of the invention comprise at least 0.01 wt% of dietary fibre, preferably at least 0.1 wt% of dietary fibre, more preferably at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, at least 15 wt%, at least 16 wt%, at least 17 wt%, at least 18 wt%, at least 19 wt%, at least 20 wt%, at least 21 wt%, at least 22 wt%, at least 23 wt%, at least 24 wt%, or at least 25 wt% of dietary fibre.

In preferred embodiments, the protein-rich compositions of the invention comprise dietary fibre in an amount of from 0.5 wt% to 40 wt%, more preferably of from 1 wt% to 30 wt%, even more preferably of from 2 wt% to 25 wt%, more preferably still of from 5 wt% to 20 wt%, yet more preferably of from 7 wt% to 17 wt%, and most preferably of from 9 wt% to 15 wt%.

Preferably, the protein-rich compositions of the invention comprise at most 60 wt% of digestible carbohydrates, preferably at most 55 wt% of digestible carbohydrates, more preferably at most 50 wt% of digestible carbohydrates, more preferably at most 45 wt% of digestible carbohydrates, even more preferably at most 40 wt% of digestible carbohydrates, and more preferably still at most 35 wt% of digestible carbohydrates, more preferably at most 30 wt% of digestible carbohydrates, even more preferably at most 25 wt% of digestible carbohydrates, and most preferably at most 20 wt% of digestible carbohydrates.

Preferably, the protein-rich compositions of the invention comprise at least 0.01 wt% of digestible carbohydrates, preferably at least 0.1 wt% of digestible carbohydrates, more preferably at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, at least 15 wt%, at least 16 wt%, at least 17 wt%, at least 18 wt%, at least 19 wt%, at least 20 wt%, at least 21 wt%, at least 22 wt%, at least 23 wt%, at least 24 wt%, at least 25 wt%, at least 26 wt%, at least 27 wt%, at least 28 wt%, at least 29 wt%, at least 30 wt%, at least 31 wt%, at least 32 wt%, at least 33 wt%, at least 34 wt%, at least 35 wt%, at least 36 wt%, at least 37 wt%, at least 38 wt%, at least 39 wt%, at least 40 wt%, at least 41 wt%, at least 42 wt%, at least 43 wt%, at least 44 wt%, at least 45 wt%, at least 46 wt%, at least 47 wt%, at least 48 wt%, at least 49 wt%, or at least 50 wt% of digestible carbohydrates.

In preferred embodiments, the protein-rich compositions of the invention comprise digestible carbohydrates in an amount of from 5 wt% to 60 wt%, more preferably of from 10 wt% to 55 wt%, even more preferably of from 20 wt% to 50 wt%, more preferably still of from 25 wt% to 45 wt%, yet more preferably of from 30 wt% to 42 wt%, and most preferably of from 35 wt% to 40 wt%.

Preferably, the protein-rich compositions of the invention comprise at most 60 wt% of sugar, preferably at most 55 wt% of sugar, more preferably at most 50 wt% of sugar, more preferably at most 45 wt% of sugar, even more preferably at most 40 wt% of sugar, and more preferably still at most 35 wt% of sugar, more preferably at most 30 wt% of sugar, even more preferably at most 25 wt% of sugar, and most preferably at most 20 wt% of sugar.

Preferably, the protein-rich compositions of the invention comprise at least 0.01 wt% of sugar, preferably at least 0.1 wt% of sugar, more preferably at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, at least 15 wt%, at least 16 wt%, at least 17 wt%, at least 18 wt%, at least 19 wt%, at least 20 wt%, at least 21 wt%, at least 22 wt%, at least 23 wt%, at least 24 wt%, or at least 25 wt% of sugar.

In preferred embodiments, the protein-rich compositions of the invention comprise sugar in an amount of from 0.5 wt% to 60 wt%, more preferably of from 1 wt% to 55 wt%, even more preferably of from 5 wt% to 50 wt%, more preferably still of from 7 wt% to 45 wt%, yet more preferably of from 10 wt% to 40 wt%, more preferably still of from 15 wt% to 35 wt%, and most preferably of from 20 wt% to 30 wt%.

Preferably, the protein-rich compositions of the invention comprise at most at most 30 wt% of fat, more preferably at most 29 wt%, at most 28 wt%, at most 27 wt%, at most 26 wt%, at most 25 wt%, at most 24 wt%, at most 23 wt%, at most 22 wt%, at most 21 wt%, at most 20 wt%, at most 19 wt%, at most 18 wt%, at most 17 wt%, at most 16 wt%, at most 15 wt%, at most 14 wt%, at most 13 wt%, at most 12 wt%, at most 11 wt%, or at most 10 wt% of fat.

Preferably, the protein-rich compositions of the invention comprise at least 0.01 wt% of fat, preferably at least 0.1 wt% of fat, more preferably at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, or at least 15 wt% of fat.

In preferred embodiments, the protein-rich compositions of the invention comprise fat in an amount of from 0.2 wt% to 20 wt%, more preferably of from 1 wt% to 15 wt%, even more preferably of from 5 wt% to 13 wt%, more preferably still of from 7 wt% to 12 wt%, yet more preferably of from 8 wt% to 11 wt%, and most preferably of from 9 wt% to 10.5 wt%.

Preferably, the solids content of the protein-rich compositions of the invention is at least 85 wt%, preferably at least 90 wt%, more preferably at least 95 wt%, more preferably at least 97 wt%, and most preferably at least 99 wt%, wherein the wt% is as compared to the total weight of the composition including fluids.

Preferably, the moisture content of the protein-rich compositions of the invention is at most 15 wt%, preferably at most 10 wt%, more preferably at most 5 wt%, more preferably at most 4 wt%, even more preferably at most 3 wt%, more preferably still at most 2 wt%, and most preferably at most 1 wt%, wherein the wt% is as compared to the total weight of the composition including fluids. In preferred embodiments, the protein-rich compositions of the invention are dry powders.

### Digestible-carbohydrate-rich compositions

In one aspect, the invention relates to a digestible-carbohydrate-containing composition obtainable from biomaterial of a plant of the species *Brassica oleracea* by a process of the invention as disclosed herein, preferably a process for the preparation of a digestible-carbohyrate-containing composition as disclosed herein.

Typically, the digestible-carbohydrate-rich compositions of the invention may comprise other components, such as ash, lipids (fats), and small molecular weight compounds, such as vitamins, antioxidants, flavours, peptides, and amino acids.

Preferably, the digestible-carbohydrate-containing compositions of the invention comprise at least 20 wt% of digestible carbohydrates.

Preferably, the digestible-carbohydrate-rich compositions of the invention comprise at least 25 wt% of digestible carbohydrates, more preferably at least 30 wt% of digestible carbohydrates, more preferably at least 35 wt% of digestible carbohydrates, even more preferably at least 40 wt% of digestible carbohydrates, and more preferably still at least 45 wt% of digestible carbohydrates, more preferably still at least 50 wt% of digestible carbohydrates, more preferably at least 55 wt% of digestible carbohydrates, more preferably at least 60 wt% of digestible carbohydrates, even more preferably at least 65 wt% of digestible carbohydrates, and most preferably at least 70 wt% of digestible carbohydrates.

Preferably, the digestible-carbohydrate-rich compositions of the invention comprise at most 95 wt% of digestible carbohydrates, more preferably at most 90 wt% of digestible carbohydrates, more preferably at most 85 wt% of digestible carbohydrates, even more preferably at most 80 wt% of digestible carbohydrates, and more preferably still at most 75 wt% of digestible carbohydrates, and most preferably at most 70 wt% of digestible carbohydrates.

In preferred embodiments, the digestible-carbohydrate-rich compositions of the invention comprise digestible carbohydrates in an amount of from 10 wt% to 90 wt%, more preferably of from 25 wt% to 85 wt%, even more preferably of from 35 wt% to 80 wt%, more preferably still of from 45 wt% to 75 wt%, yet more preferably of from 55 wt% to 70 wt%, more preferably still of from 60 wt% to 69 wt%, and most preferably of from 65 wt% to 68 wt%.

In preferred embodiments, substantially all digestible carbohydrates in the digestible-carbohydrate-rich compositions of the invention are sugars. Preferably, the digestible-carbohydrate-rich composition of the invention comprises fructose, glucose, and sucrose. Preferably, essentially all digestible carbohydrates in the digestible-carbohydrate-rich composition of the invention are selected from the group consisting of fructose, glucose, and sucrose.

Preferably, the digestible-carbohydrate-rich compositions of the invention comprise at most 20 wt% of dietary fibre, more preferably at most 15 wt% of dietary fibre, more preferably at most 10 wt% of dietary fibre, even more preferably at most 8 wt% of dietary fibre, more preferably still at most 6 wt% of dietary fibre, more preferably at most 4 wt% of dietary fibre, more preferably at most 3 wt% of dietary fibre, and most preferably at most 2 wt% of dietary fibre.

Preferably, the digestible-carbohydrate-rich compositions of the invention comprise at least 0.01 wt% of dietary fibre, preferably at least 0.1 wt% of dietary fibre, more preferably at least 0.5 wt%, and most preferably at least 1 wt% of dietary fibre.

In preferred embodiments, the digestible-carbohydrate-rich compositions of the invention comprise dietary fibre in an amount of from 0.1 wt% to 20 wt%, more preferably of from 0.5 wt% to 10 wt%, even more preferably of from 0.7 wt% to 5 wt%, more preferably still of from 0.8 wt% to 4 wt%, yet more preferably of from 1.0 wt% to 3 wt%, and most preferably of from 1.5 wt% to 2.7 wt%.

The digestible-carbohydrate-rich compositions of the invention comprise at most 30 wt% of protein, preferably at most 27 wt% of protein, more preferably at most 25 wt% of protein, more preferably at most 22 wt% of protein, even more preferably at most 20 wt% of protein, and more preferably still at most 15 wt% of protein, and most preferably at most 10 wt% of protein.

Preferably, the digestible-carbohydrate-rich compositions of the invention comprise at least 0.01 wt% of protein, preferably at least 0.1 wt% of protein, more preferably at least 0.5 wt%, at least 1 wt%, at least 2 wt%, at least 3 wt%, at least 4 wt%, at least 5 wt%, at least 6 wt%, at least 7 wt%, at least 8 wt%, at least 9 wt%, at least 10 wt%, at least 11 wt%, at least 12 wt%, at least 13 wt%, at least 14 wt%, or at least 15 wt% of protein.

In preferred embodiments, the digestible-carbohydrate-rich compositions of the invention comprise protein in an amount of from 0.5 wt% to 30 wt%, more preferably of from 1 wt% to 27 wt%, even more preferably of from 5 wt% to 25 wt%, more preferably still of from 7 wt% to 23 wt%, yet more preferably of from 8 wt% to 22 wt%, more preferably still of from 10 wt% to 21 wt%, and most preferably of from 15 wt% to 20 wt%.

Preferably, the digestible-carbohydrate-rich compositions of the invention comprise at least 15 wt% of sugar, more preferably at least 20 wt% of sugar, more preferably at least 25 wt% of sugar, more preferably at least 30 wt% of sugar, more preferably at least 35 wt% of sugar, even more preferably at least 40 wt% of sugar, and more preferably still at least 45 wt% of sugar, more preferably still at least 50 wt% of sugar, more preferably at least 55 wt% of sugar, more preferably at least 60 wt% of sugar, even more preferably at least 65 wt% of sugar, and most preferably at least 70 wt% of sugar.

Preferably, the digestible-carbohydrate-rich compositions of the invention comprise at most 95 wt% of sugar, more preferably at most 90 wt% of sugar, more preferably at most 85 wt% of sugar, even more preferably at most 80 wt% of sugar, and more preferably still at most 75 wt% of sugar, and most preferably at most 70 wt% of sugar.

In preferred embodiments, the digestible-carbohydrate-rich compositions of the invention comprise sugar in an amount of from 10 wt% to 90 wt%, more preferably of from 25 wt% to 85 wt%, even more preferably of from 35 wt% to 80 wt%, more preferably still of from 45 wt% to 75 wt%, yet more preferably of from 55 wt% to 70 wt%, more preferably still of from 60 wt% to 69 wt%, and most preferably of from 65 wt% to 68 wt%.

Preferably, the digestible-carbohydrate-rich compositions of the invention comprise at most 20 wt% of fat, more preferably at most 15 wt% of fat, more preferably at most 10 wt% of fat, even more preferably at most 8 wt% of fat, more preferably still at most 6 wt% of fat, more preferably at most 4 wt% of fat, more preferably at most 3 wt% of fat, and most preferably at most 2 wt% of fat.

Preferably, the digestible-carbohydrate-rich compositions of the invention comprise at least 0.01 wt% of fat, preferably at least 0.1 wt% of fat, more preferably at least 0.5 wt%, and most preferably at least 1 wt% of fat.

In preferred embodiments, the digestible-carbohydrate-rich compositions of the invention comprise fat in an amount of from 0.1 wt% to 20 wt%, more preferably of from 0.5 wt% to 10 wt%, even more preferably of from 0.7 wt% to 5 wt%, more preferably still of from 0.8 wt% to 4 wt%, yet more preferably of from 1.0 wt% to 3 wt%, and most preferably of from 1.5 wt% to 2.7 wt%.

Preferably, the solids content of the digestible-carbohydrate-rich compositions of the invention is at least 35 wt%, preferably at least 40 wt%, more preferably at least 40 wt%, at least 41 wt%, at least 42 wt%, at least 43 wt%, at least 44 wt%, at least 45 wt%, at least 46 wt%, at least 47 wt%, at least 48 wt%, at least 49 wt%, at least 50 wt%, at least 51 wt%, at least 52 wt%, at least 53 wt%, at least 54 wt%, at least 55 wt%, at least 56 wt%, at least 57 wt%, at least 58 wt%, at least 59 wt%, or at least 60 wt%, wherein the wt% is as compared to the total weight of the composition including fluids.

Preferably, the moisture content of the digestible-carbohydrate-rich compositions of the invention is at most 60 wt%, preferably at most 59 wt%, more preferably at most 58 wt%, at most 57 wt%, at most 56 wt%, at most 55 wt%, at most 54 wt%, at most 53 wt%, at most 52 wt%, at most 51 wt%, at most 50 wt%, at most 49 wt%, at most 48 wt%, at most 47 wt%, at most 46 wt%, at most 45 wt%, at most 44 wt%, at most 43 wt%, at most 42 wt%, at most 41 wt%, at most 40 wt%, at most 39 wt%, at most 38 wt%, at most 37 wt%, at most 36 wt%, at most 35 wt%, at most 34 wt%, at most 33 wt%, at most 32 wt%, at most 31 wt%, or at most 30 wt%, wherein the wt% is as compared to the total weight of the composition including fluids. In preferred embodiments, the digestible-carbohydrate-rich compositions of the invention are dry powders.

### Process of the invention

The invention also relates to a process for the preparation of one or more products from biomaterial of a plant of the species *Brassica oleracea.* The one or more products are selected from the group consisting of a fibre-containing composition, a digestible-carbohydrate-containing composition, and a protein-containing composition. In preferred embodiments, the digestible-carbohydrate-containing compositions are sugar-rich compositions.

The process of the invention comprises at least steps (a)-(c) as disclosed herein. Furthermore, the process of the invention may further comprise one or more steps (d)-(h) as disclosed herein. In principle, all combinations of steps are possible, but if the process comprises step (e), the process also comprises step (f) and vice versa, and if the process comprises step (g), the process also comprises steps (e) and (f).

In preferred embodiments, the process for the preparation of one or more products from biomaterial of a plant of the species *Brassica oleracea* comprises steps (d) as disclosed herein. In other preferred embodiments, the process for the preparation of one or more products from biomaterial of a plant of the species *Brassica oleracea* comprises steps (e) and (f) as disclosed herein. In other preferred embodiments, the process for the preparation of one or more products from biomaterial of a plant of the species *Brassica oleracea* comprises step (g) as disclosed herein. In other preferred embodiments, the process for the preparation of one or more products from biomaterial of a plant of the species *Brassica oleracea* comprises step (h) as disclosed herein.

In preferred embodiments, the one or more products is a fibre-containing composition. In that case, it is preferred that the process of the invention is a process for the preparation of a fibre-containing composition, and comprises steps (a)-(c) as disclosed herein. Preferably, the process for the preparation of a fibre-containing composition further comprises step (h) as disclosed herein, wherein in step (h) the fibre-containing composition is subjected to one or more concentration and/or drying steps.

It will be understood that the fibre-containing composition can be obtained at various steps in the process of the invention, and may be subjected to further purification steps, *e.g.* step (d) to, *inter alia,* further lower the amount of digestible carbohydrates in the fibre-containing composition. However, as these further purification steps do not lower the content of dietary fibres in the fibre-containing composition, after these purification steps the obtained composition can still be referred to as a fibre-containing composition. If a more precise wording is desired, the fibre-containing composition obtained after step (d) can be referred to as an fibre-containing composition with an extra low content of digestible carbohydrates.

In other preferred embodiments, the one or more products is a protein-containing composition. In that case, it is preferred that the process of the invention is a process for the preparation of a protein-containing composition, said process comprising steps (a)-(c), (e), and (f), as disclosed herein. Preferably, the process for the preparation of a protein-containing composition further comprises step (h) as disclosed herein, wherein in step (h) the protein-containing composition is subjected to one or more concentration and/or drying steps.

In other preferred embodiments, the one or more products is a digestible-carbohydrate-containing composition. In that case, it is preferred that the process of the invention is a process for the preparation of a digestible-carbohydrate-containing composition. Preferably, said process for the preparation of a digestible-carbohydrate-containing composition comprises steps (a)-(d) as disclosed herein. In other preferred embodiments, said process for the preparation of a digestible-carbohydrate-containing composition comprises steps (a)-(c), and steps (e)-(f), and preferably also step (g), as disclosed herein.

In other preferred embodiments, said process for the preparation of a digestible-carbohydrate-containing composition comprises steps (a)-(f), and preferably also step (g), all steps as disclosed herein. In that case, the digestible-carbohydrate-containing compositions as obtained in steps (d), (f) and/or (g) can be collected separately, and optionally separately subjected to step (h), or said compositions can be combined, and optionally be subjected to step (h).

Preferably, the process for the preparation of a digestible-carbohydrate-containing composition further comprises step (h) as disclosed herein, wherein in step (h) the digestible-carbohydrate-containing composition is subjected to one or more concentration and/or drying steps.

It will be understood that the digestible-carbohydrate rich composition can be obtained at various steps in the process of the invention, and may be subjected to further purification steps, e.g. step (g) to remove salt ions. However, as these further purification steps do not lower the content of digestible carbohydrates in the digestible-carbohydrate-containing composition, after these purification steps the obtained composition can still be referred to as a digestible-carbohydrate-containing composition. If a more precise wording is desired, the digestible-carbohydrate-containing composition obtained in step (f) can be referred to as a high-salt, digestible-carbohydrate-containing composition. Likewise, the digestible-carbohydrate-containing composition obtained in step (g) can be referred to as a low-salt, digestible-carbohydrate-containing composition.

Furthermore, it will be understood that after optional step (h), the concentrated and/or dried product is still referred to as a fibre-containing composition, a digestible-carbohydrate-containing composition, or a protein-containing composition, since the dry matter composition is not affected by concentration and/or drying. However, if a more precise phrasing is desired, the compositions subjected to step (h) may be referred to as concentrated products or dried products.

### Step (a): providing the biomaterial

In the first step of the process of the invention biomaterial is provided. In the invention the biomaterial is of a plant from the *Brassicaceae* family. It will be understood that the *Brassicaceae* family is also called the *Cruciferae* family in the art, and the terms are used interchangeably within this specification. One of the advantages of using a plant from the *Brassicaceae* family is that the resulting products have no unpleasant odour.

The biomaterial is a plant of the genus *Brassica.* The plants of this genus are also known as cruciferous vegetables or cabbages.

The biomaterial is a plant of the species *Brassica oleracea.* Preferably, the plant of the species *Brassica oleracea* is selected from the group consisting of *Brassica oleracea* Acephala, *Brassica oleracea* Viridis, *Brassica oleracea* Alboglabra, *Brassica oleracea* Botrytis, *Brassica oleracea* Capitata, *Brassica oleracea* Gemmifera, *Brassica oleracea* Gongylodes, and *Brassica oleracea* Italica. Preferably, the biomaterial is kale, collard greens, kai-lan (Chinese broccoli), cauliflower, Romanesco broccoli, broccoflower, cabbage, brussels sprouts, kohlrabi, and broccoli.

In a preferred embodiment, the biomaterial is a cabbage. More preferably, the cabbage is selected from the group consisting of savoy cabbage, green cabbage, red cabbage, and white cabbage. Most preferably, the biomaterial is white cabbage *(Brassica oleracea* convar. *capitata* var. *alba).*

The biomaterial according to the invention essentially consists of leaves. Preferably, at least one leaf is selected from the group consisting of a green leaf, a red leaf, a white leaf, and a yellow leaf. Preferably, the at least one leaf is an outer leaf of the plant.

In preferred embodiments, the biomaterial is obtained from a residual stream. In the context of the invention, such a residual stream typically comprises leaves that are left after processing the plants, for example after cutting. Moreover, such a residual stream can comprise plants or parts thereof that have failed to meet the standard for processing as a food (e.g., undersized plants or damaged plants). Moreover, such a residual stream can be plants or parts thereof that were left on the field after harvesting crops. Selecting biomaterial obtained from a residual stream for preparing one or more products of the invention is advantageous, because otherwise the residual stream would go to waste, and its useful components would be lost.

Preferably, the biomaterial has a size such that the longest dimension thereof is at most 5 cm. Optionally, the biomaterial can be cut to the desired dimensions before proceeding to step (b) of the process of the invention. Conventional means to cut plant material are known to the skilled person.

In addition, the biomaterial is optionally washed prior to step (b), depending on the quality of the starting material, for example to remove dirt and sand. The washing equipment is preferably divided in three sections: a washing section, a steam spraying section (if the optional blanching step, as described below, is carried out), and a spray cooler section (cooling / additional washing). These sections are entirely optional, and the use thereof depends on the quality of starting material. For the removal of sand, conventional settling tanks, medium consistency hydrocyclones, or vortex cyclones can be used.

In some embodiments, the biomaterial is subjected to blanching before the biomaterial is subjected to step (b) of the process of the invention. In principle, one of the advantages of the process of the invention is that blanching can be avoided. In preferred embodiments, when the biomaterial is of white cabbage, the process of the invention does not comprise a step of blanching the biomaterial. Typically, white cabbage does not contain bitter components, and blanching is not necessary. As such, a process can be provided in which blanching is avoided, which is beneficial because it reduces the number of steps in the process. Moreover, blanching potentially reduces the amount of Vitamin C in the fibre product, which may be considered a disadvantage in some applications.

### Step (b): preparing an aqueous slurry

After providing the biomaterial, an aqueous slurry having a pH of from 7.5 to 8.5 is prepared. The skilled person is fully aware of how to prepare such an aqueous slurry. Typically, such a preparation comprises the steps of subjecting the biomaterial to mechanical treatment, and raising the pH to of from 7.5 to 8.5 by contacting the biomaterial with a basic substance under mixing. Optionally, the biomaterial is contacted with water in a separate step as discussed below. These steps can be carried out in any order, or simultaneously.

Preferably, the mechanical treatment is selected from the group consisting of disrupting, homogenization, and a combination thereof. Suitable milling or homogenizing equipment to conduct such mechanical treatments is known to the skilled person and includes, e.g., blenders, ball mills, high shear mixers, inline dispersers, microcutters, shredders, pulpers, cutter pumps, and the like.

Before, after or during the mechanical treatment the biomaterial is preferably contacted with a basic substance under mixing so as to raise the pH to the desired value. The mixing with the basic material can be conducted using any conventional mixing, stirring, or homogenizing apparatus. If required, the pH of the aqueous slurry can be monitored during mixing, and more of the basic substance can be added until the desired pH is reached, or so as to maintain the desired pH.

The basic substance can be an aqueous alkaline liquid, and subjected to mixing in the presence of water, so as to provide an aqueous slurry comprising solids and liquid. In the event that the basic substance is an aqueous alkaline liquid, it will generally not be necessary to separately add water, and contacting the biomaterial with water in a separate step is entirely optional. In the event that the basic substance is a solid, water will be added, generally in a sufficient quantity to yield an aqueous slurry that is pumpable. The basic substance can also be a gas (e.g. ammonia). In that case water will also be added separately to the mass, and the gas will be allowed to flow through it.

Preferably, the basic substance is a monovalent base selected from the group consisting of sodium hydroxide, potassium hydroxide, sodium hydrogen carbonate, potassium hydrogen carbonate, ammonium hydroxide and solutions thereof. The use of a monovalent base can be advantageous, because multivalent bases may induce protein aggregation, which is typically undesired.

In preferred embodiments, the aqueous alkaline liquid is a diluted strong base, such as a solution of sodium hydroxide. Preferably, the concentration of sodium hydroxide in such a solution is in a range of from 0.5 wt% to 30 wt%, more preferably from 5 to 25 wt%, wherein the weight percentage is as compared to the total weight of the solution including fluids.

As such, in preferred embodiments step (b) of the process of the invention comprises the steps of:
(b 1) optionally contacting said biomaterial with water;
(b2) subjecting said biomaterial to a mechanical treatment selected from the group consisting of disrupting, homogenization, and a combination thereof; and
(b3) contacting said biomaterial with a basic substance under mixing.

As explained above, step (b 1) is entirely optional, and is only required if the basic substance in step (b3) is a solid or a gas. Furthermore, as explained above steps (b 1), (b2), and (b3) can be carried out in any order or simultaneously. However, it is preferred that step (b2) be carried out prior to step (b3).

If step (b 1) is carried out, it is preferred that the amount of water with which the biomaterial is contacted has a weight in a range of from 1 to 15 times, preferably 5 to 10 times, the dry weight of the biomaterial. Preferably, the aqueous slurry has a pH in a range of from 7.9 to 8.5, and most preferably of from 8.0 to 8.5. The protein in the product of the invention remains in its native form.

Therefore, the pH of the aqueous slurry is at most 8.5.

Preferably, the aqueous slurry is mixed and maintained at the desired pH for at least 5 minutes, more preferably at least 10 minutes, more preferably still for at least 15 minutes. If required, maintaining the pH at the desired value can be achieved by contacting the aqueous slurry with an additional amount of a basic substance, wherein the basic substance is as described herein.

### Step (c): separation of the aqueous slurry

In step (c) of the process of the invention the aqueous slurry is subjected to separation so as to obtain a liquid fraction and a solid fraction. The solid fraction obtained in this step is a composition enriched in dietary fibre, viz. a fibre-containing composition of the invention. The liquid fraction obtained in step (c) is enriched in digestible carbohydrates and protein, and as such may also be of commercial interest, and may be subjected to concentration and/or drying steps as disclosed herein for digestible-carbohydrate-containing compositions and/or protein-containing compositions.

This separation in step (c) can be conducted by means of various techniques, such as centrifuging, filtering, sieving, and/or pressing. Filtering is preferred, and more preferably the filtering is conducted in conjunction with pressing. Typical filter pore sizes are 100 pm to 1000 pm, preferably of from 150 µm to 500 µm, and most preferably about 250 pm.

In the case of recovery of protein and carbohydrate concentration steps may be hampered by the presence of remaining small fibre or debris. Therefore, in case of protein and carbohydrate recovery the solid/liquid separation preferably involves one or more further steps of decanting and/or sieving the filtrate, so as to separate off a remaining amount of fibrous material and small debris.

In a preferred embodiment, the separation step (c) is carried out by providing the aqueous slurry on a sieving web or sieving belt, and introducing the mass on the sieving web or sieving belt into a fibre press. Without wishing to be bound by theory, the inventors believe that with this approach a higher drying efficiency can be achieved.

After separation in step (c), the solid fraction typically has a solids content of at least 10 wt% as compared to the total weight of the composition, preferably at least 13 wt%, and more preferably at least 20 wt%.

### Step (d): additional washing steps

Optionally, the solid fraction or part thereof as obtained in step (c) is subjected to one or more additional washing steps in step (d), so as to obtain one or more liquid fractions and a solid fraction. The solid fraction obtained in step (d) is a fibre-containing composition, and the one or more liquid fractions are digestible-carbohydrate-containing compositions.

Advantageously, this one or more additional washing step further increases the amount of dietary fibre in the fibre product, and decreases the amount of digestible carbohydrates in the fibre product. Moreover, the liquid fractions can be collected separately or combined, to provide digestible-carbohydrate-containing compositions.

In the one or more additional washing steps, the solid fraction is preferably contacted with water.

In preferred embodiments, the solid fraction obtained in step (c) is sprayed with water. This can for example be done if the solid fraction is transported on a sieving web or sieving belt.

In other preferred embodiments, washing can also be performed by mixing the fibre in a (separate) vessel with an amount of water. Preferably, the solid fraction or part thereof as obtained in step (c) is contacted with water so as to form a mixture, after which the mixture is stirred. In preferred embodiments, the mixture is stirred for at least 5 minutes, more preferably for 5 to 25 minutes, for example about 15 minutes. Next, the mixture is preferably again subjected to separation, preferably as described herein for step (c) or with other filtering or screening techniques such as a cycloscreen, to once again yield a solid fraction, which is a fibre-containing composition of the invention, and a liquid fraction.

During this additional washing step, it is preferred that the water with which the solid fraction is contacted has a temperature in a range of from 20 °C to 80 °C, more preferably of from 40 °C to 70 °C, most preferably of from 55 °C to 65 °C.

### Steps (e) and (f): acidification and separation

Optional steps (e) and (f) of the process of the invention serve to prepare an acid-treated liquid that can be separated into an aqueous process liquid and a liquid gel. The aqueous process liquid is a digestible-carbohydrate-containing composition, and the liquid gel is a protein-containing composition. As such, at least some amount of proteins and digestible carbohydrates are separated in steps (e) and (f). Particularly, the aqueous process liquid typically comprises hardly any protein, while it is rich in digestible carbohydrates.

In step (e) the liquid fraction obtained in step (c), the one or more liquid fractions obtained in step (d), and/or combinations thereof are subjected to acidification so as to obtain an acid-treated liquid. It will be understood that if optional step (d) is not carried out, only the liquid fraction obtained in step (c) will be subjected to step (e).

The acidification in step (e) is typically done by contacting the liquid fraction with an aqueous acid, such as aqueous hydrochloric acid. Other suitable acids, e.g. formic acid, acetic acid, carbon dioxide (gaseous), or solid acids can also be used. The concentration of the acid typically is in a range of from 0.1 to 1.0 M.

In preferred embodiments, the acidification is conducted such as to bring the pH of the liquid fraction down to 6 or less in the acid-treated liquid. As such, the acid-treated liquid preferably has a pH of at most 6, more preferably of at most 5. In other preferred embodiments, the acid-treated liquid has a pH in a range of from 2.5 to 6, more preferably of from 3.5 to 5.5, even more preferably of from 4 to 5, and most preferably of from 4 to 4.5.

In step (f), the aqueous process liquid and liquid gel are separated. The separation in step (f) is suitably conducted by a centrifugal technique, using a customary decanter, sedicanter, separator, purifier or hydrocyclone. The aqueous process liquid generally comprises salts and sugars as further discussed below.

### Step (g): removing salt ions

In step (g) of the process of the invention salt ions are removed from the aqueous process liquid as obtained in step (f). Then, a low-salt aqueous process liquid is obtained, which is a digestible-carbohydrate-containing composition.

Step (g) is especially beneficial if the process for preparing a digestible-carbohydrate-containing composition comprises steps (e) and (f). Then, typically the resulting liquid has been contacted with both a basic substance and an acid, which generally means that the resulting liquid also comprises salt ions, e.g. sodium ions and chloride ions if NaOH was used as the basic substance and HCl as the acid. These salt ions (or the salt if the resulting liquid is dried) are typically undesired, for example because they may influence the taste of the resulting digestible-carbohydrate-containing composition. Advantageously, step (g) can be employed to remove these typically undesired salt ions.

Preferably, the salt ions are selected from the group consisting of Na⁺, Cl-, K⁺, HCO₃⁻, CO₃²⁻, NH₄⁺, SO₄²-, NO₃⁻, and SO₃²⁻. Most preferably, the salt ions are Na⁺ and Cl-.

In preferred embodiments, step (g) is carried out by employing a semipermeable membrane that separates the smaller salt ions and the larger carbohydrate molecules based on size. The skilled person is fully capable of selecting a membrane that will filter out the salt ions in step (g), while retaining the digestible carbohydrates in the aqueous process liquid. Preferably a Reversed Osmosis-type or a Nanofiltration-type of semipermeable membrane is used. Other methods that can be employed in step (g) include ion-exchange membrane, ion-exchange chromatography, size-exclusion chromatography, and the like.

It will be understood that prior to being subjected to step (g), the aqueous process liquid obtained in step (f) can be subjected to concentration and/or reconstitution steps. In the context of the invention, these concentrated and/or reconstituted aqueous process liquids are still considered aqueous process liquids as obtained in step (f).

### Step (h): concentration and/or drying

In step (h) of the process of the invention the fibre-containing composition, the digestible-carbohydrate-containing composition, and/or the protein-containing composition are subjected to one or more concentration and/or drying steps so as to obtain one or more dry products. Preferably, the fibre-containing composition of the invention is subjected to step (h). In other preferred embodiments, the digestible-carbohydrate-containing composition of the invention is subjected to step (h). In yet other preferred embodiments, the protein-containing composition of the invention is subjected to step (h).

For all compositions of the invention, it is conceivable to isolate one or more products as an aqueous solution and/or an aqueous, thickened gel in one place, and subject the one or more products to drying and/or concentration, and, e.g., packaging in another place (e.g. in the event of a pumpable gel transported from a protein recovery facility to a food ingredient packaging facility).

Regarding the fibre-containing composition, the concentration and/or drying steps are preferably carried out as follows. Concentrating the fibre-containing composition can be suitably performed by filtration, which results in water being removed as a filtrate, and a thickened solid fraction as a retentate. The fibre-containing composition can also be subjected to additional steps of sieving and/or decanting as described for step (c). It is also possible to subject the fibre-containing composition to drying techniques such as evaporation.

Preferably, the drying of the fibre-containing composition in step (h) is carried out by contacting the solid fraction obtained under step (c) to a gas selected from the group consisting of air, oxygen, and inert gases. Inert gases are preferred if it is desired to minimize oxidation of the fibre-containing composition. Suitable inert gases include, but are not limited to, nitrogen and argon. The drying can be conducted on a belt dryer. Preferably, the gas has a temperature of at least 30 °C, more preferably at least 45 °C.

In preferred embodiments, the solid fraction as obtained in step (c) is dried in two consecutive steps. First, the solid fraction is subjected to cold pressing at a temperature of at most 45 °C, preferably in a range of from 2 °C to 45 °C. Suitable presses for cold pressing are known in the art. Second, the solid fraction is subjected to hot air or another suitable drying technique wherein the temperature is at most 120 °C, preferably in a range of from 50 °C to 120 °C. The advantage of these two consecutive drying steps is that it increases the water absorption of the resulting fibre composition. Without wishing to be bound by theory, the inventors believe that this results from inhibiting hydrophobization of the fibre during drying.

Regarding the protein-containing composition, the concentration and/or drying steps are preferably carried out as follows. Concentrating the liquid gel as obtained in step (f) can be suitably performed by microfiltration, which results in water being removed as a filtrate, and a thickened gel as a retentate. It is also possible to subject the gel to drying techniques such as evaporation or freeze drying techniques. The drying will most typically involve spray-drying, using conventional atomizing equipment.

Regarding the digestible-carbohydrate-containing composition, the concentration and/or drying steps are preferably carried out as follows. Concentrating the digestible-carbohydrate-containing composition can be suitably performed by microfiltration, which results in water being removed as a filtrate, and a concentrated solution as a retentate. It is also possible to subject the digestible-carbohydrate-containing composition to drying techniques such as evaporation or freeze drying techniques. Drying of the digestible-carbohydrate-containing composition will most typically involve drum-drying or thin-film drying. Vacuum drying can be used as well. It will be understood that these drying techniques can be regarded as concentration techniques if not all moisture is removed from the composition. For example, after steps (f) and/or (g) the digestible-carbohydrate-containing composition typically has a dry solids matter content of about 20-25 wt%, as compared to the total weight of the composition including fluids. After subjecting this composition to drying using drum-drying and/or thin-film drying, the dry solids matter content is typically increased to at least 60 wt%, as compared to the total weight of the composition including fluids. This dry solids matter content of at least 60 wt% is advantageous, because it ensures stability against microbes and thus increases the shelf life of the digestible-carbohydrate-containing composition.

### Temperature

In preferred embodiments, the processes of the invention are carried out at a temperature below room temperature, except in steps where temperatures above room temperature are preferred as described herein, the optional additional washing step after the initial separation step, and/or in some embodiments wherein the solid fraction is dried at elevated temperatures. The advantage of employing low temperatures is that undesired processes such as bacterial growth and enzymatic conversion are slowed down, while all other advantages of the process of the invention can still be achieved.

Steps (b) and (c) as defined herein are carried out at a temperature in a range of from 0°C to 20°C.

Preferably, the process of the invention is carried out at a temperature of at most 20 °C, more preferably at most 15 °C, more preferably still at most 12 °C, even more preferably at most 10 °C, and most preferably at most 8 °C. Any one of the optional steps (e)-(g) may also be carried out at these temperatures.

Preferably, the process of the invention is carried out at a temperature of at least 0 °C, more preferably at least 2 °C, and most preferably at least 4 °C. Any one of the optional steps (e)-(g) may also be carried out at these temperatures.

As such, the process of the invention is preferably carried out at a temperature in a range of from 0 °C to 20 °C, more preferably of from 2 °C to 12 °C, and most preferably of from 4 °C to 8 °C. Any one of the optional steps (e)-(g) may also be carried out at these temperatures.

### Use

The invention also relates to the use of a composition according to the invention, preferably a fiber-rich composition, in feed or food. In principle, the compositions of the invention can be applied in any kind of feed or food. Nevertheless, preferred food products are meat products, meat analogues, bread, pasta, pizza, deserts such as yoghourts, pastry, and the like.

For the protein-rich compositions of the invention the use preferably relates to use in food products such as meat analogues or meat replacers, and the like, or as an additional or alternative protein source.

For the digestible-carbohydrate-rich composition of the invention the use preferably relates to use in food products such as soups, syrups, beverages (in particular soft drinks), and the like. In addition, the invention pertains to the use of a digestible-carbohydrate-rich composition of the invention as a replacement for syrup, in particular corn syrup.

Preferably, the compositions of the invention are used as feed or food components that are odourless, or at least do not have an unpleasant odour. In particular, this holds for fibre-rich compositions of the invention obtained from biomaterial of a white cabbage.

The invention is hereinafter illustrated with reference to the following examples. The examples are not intended to be limiting to the invention.

### Examples

In the examples below, the specific numbers given for the amounts of starting materials and products, and the specific percentages of dry matter (DM), serve as an illustration only. In addition, other biomaterial as described herein can be used as well, in accordance with the detailed description of the invention. Also, the pH adjusting agents are not limited to aqueous sodium hydroxide and aqueous hydrochloric acid, but rather extend to other bases and acids. It will be understood that the pH values in the examples are illustrations, and other pH values can be applied, such as indicated in the detailed description of the invention.

### Example 1: fibre product obtainable after steps (a)-(c) of the invention

In the first step, fresh white cabbage *(Brassica oleracea* convar. *capitata* var. *alba)* leaf material was provided.

Optionally, depending on the size of the input material, the biomaterial is subjected to pre-cutting to a size that can be handled in a washing line; preferably to a size below 5 cm in all dimensions. Then, the biomaterial can be dosed onto a vegetable washing line, if desired. The washing equipment is preferably divided in three sections: a washing section, a steam spraying section (blanching), and a spray cooler section (cooling / further washing). These sections are entirely optional, and the use thereof depends on the quality of starting material.

In a next step, the leaf material was contacted with water so as to obtain 1000 kg of an aqueous composition of 13 wt% dry matter (as compared to the total weight of the composition including fluids).

Next, the aqueous composition was fed into a dissolver tank, and was mixed with 1000 kg of water, and milled with a high shear mixer and an inline disperser into a pumpable slurry.

To the pumpable slurry a 25% sodium hydroxide solution was added until the pH of the aqueous slurry is between 8.0 and 8.6. The slurry was circulated approximately 15 minutes during which the pH was maintained at said level. Thereafter the slurry was pumped to a filter press, and the slurry was pressed so as to remove the water fraction with the dissolved compounds, yielding a solid fraction which is the fibre product. The composition of this fibre product, viz. as obtained after steps (a)-(c) of the process of the invention, is given in the third column of Table 1 below.

The fibre product contains more than double the amount of dietary fibre and less than 25% of sugar as compared to the untreated source material. During this mild procedure the protein level is maintained at about 75% of the original amount. Preferably, after pressing the fibre product is dried with hot air at moderate temperatures; preferably below 120 °C to a typical solids content of at least 90 wt% solids.

### Example 2: fibre product obtainable after steps (a)-(d) of the invention

In a separate experiment, the steps of Example 1 were repeated, and after pressing the fibre product was contacted with water under stirring for about 15 minutes, and again pressed in a filter press to yield a solid fraction which is again a fibre product, and a liquid fraction that is a digestible-carbohydrate-containing composition. This additional washing step, viz. step (d) of the process of the invention as disclosed herein, further increased the amount of dietary fibre in the fibre product, and decreases the amount of digestible carbohydrates in the fibre product (see the fourth column in Table 1 below).

In Table 1 the composition is given of white cabbage and of the products obtained therefrom in accordance without an additional washing step (third column) and with one additional washing step (fourth column). A comparison with a product described in the prior art is provided as well (last column). In Table 1, the values are given as wt% as compared to the dry weight of the composition.

**Table 1.**

| | White cabbage | Fibre product of Example 1 (steps (a)-(c)) | Fibre product of Example 2 (steps (a)-(d)) | Prior art¹ (blanched) |
|---|---|---|---|---|
| Dietary fibres | 24.6 | 59.5 | 79 | 21-35 |
| Digestible carbohydrates | 58.2 | 18 | 13 | 35-45 |
| Of which sugars | 32.5 | 8.6 | 4.5 | N.D. |
| Protein | 13.4 | 9.1 | 7 | 20-22 |
| Fat | 1.1 | 1.8 | 1 | 1.1-2.8 |
| Other | 2.7 | 11.6 | 0 | |
| Rehydration rate | N.D. | ≥8 | ≥9 | ~8 |

| | | | | |
|---|---|---|---|---|
| N.D. = not determined. ¹ A.K. Surbhi and P. Dhurve, International Journal of Current Research 2017, volume 9, issue 6, pages 52457-52463. | | | | |

### Example 3: preparation protein product and digestible carbohydrate product

The steps of Example 1 were repeated, and the water fraction containing the dissolved compounds obtained after pressing was contacted with aqueous hydrochloric acid (3% m/m) so as to lower the pH of the protein-containing liquid to 4.2, so as to form a protein gel. Using a decanter, the resulting protein gel was separated from a clarified liquid fraction (which typically comprises sugars and/or salt ions). The gel was subjected to drying, so as to obtain a dry protein-containing composition. Optionally, the clarified liquid fraction can be subjected to removal of salt ions, for example by using a semipermeable membrane that separates the digestible carbohydrates and salt ions based on their respective sizes. The clarified liquid fraction was subjected to concentration and/or drying steps to obtain a digestible-carbohydrate-rich composition.
The compositions of the products obtained in Example 3 are shown below in Table 2. In Table 2, the values are given as wt% as compared to the dry weight of the composition.

**Table 2.**

| | White cabbage | Protein product of Example 3 | Digestible carbohydrate product of Example 3 | Prior art¹ (blanched) |
|---|---|---|---|---|
| Dietary fibres | 24.6 | 9.6 | 2.4 | 21 - 35 |
| Digestible carbohydrates | 58.2 | 38.3 | 65.7 | 35 - 45 |
| Of which sugars | 32.5 | 6.0 | 64.6² | N.D. |
| Protein | 13.4 | 37.7 | 17.5 | 20-22 |
| Fat | 1.1 | 10.1 | 2.4 | 1.1 - 2.8 |
| Salt (NaCl) | N.D. | 0.50 | 3.6 | |
| Other | 2.7 | | | |

| | | | | |
|---|---|---|---|---|
| N.D. = not determined. ¹ A.K. Surbhi and P. Dhurve, International Journal of Current Research 2017, volume 9, issue 6, pages 52457-52463. ² the digestible carbohydrate product of Example 3 contained 28.0 wt% of fructose, 31.3 wt% of glucose, and 5.3 wt% of saccharose, wherein the weight percentages are as compared to the dry weight of the composition. | | | | |

## Claims

1. A fibre-containing composition obtainable from biomaterial of a plant of the species *Brassica oleracea* by a process comprising the steps of:
(a) providing said biomaterial;
(b) preparing an aqueous slurry having a pH in a range of from 7.5 to 8.5 from said biomaterial; and
(c) subjecting the aqueous slurry to separation so as to obtain a liquid fraction and a solid fraction;
wherein the solid fraction is said fibre-containing composition;
wherein said steps (b) and (c) are carried out at a temperature in a range of from 0°C to 20°C;
wherein the biomaterial essentially consists of leaves;
wherein said fibre-containing composition comprises at most 30 wt% of protein as compared of the dry weight of the composition; and
wherein said protein is in its native form.

2. The fibre-containing composition according to claim 1, wherein step (b) of the process comprises the steps of:
(b 1) optionally contacting said biomaterial with water;
(b2) subjecting said biomaterial to a mechanical treatment selected from the group consisting of disrupting, homogenization, and a combination thereof; and
(b3) contacting said biomaterial with a basic substance under mixing;
wherein steps (b 1), (b2), and (b3) can be carried out in any order or simultaneously.

3. The fibre-containing composition according to any one of the preceding claims, wherein the process further comprises the step of:
(d) subjecting the solid fraction obtained in step (c) to one or more additional washing steps so as to obtain one or more liquid fractions and a solid fraction, wherein the solid fraction is a fibre-containing composition, and the one or more liquid fractions are digestible-carbohydrate-containing compositions.

4. The fibre-containing composition according to any one of the preceding claims, wherein the plant of the species *Brassica oleracea* is selected from the group consisting of *Brassica oleracea* Acephala, *Brassica oleracea* Viridis, *Brassica oleracea* Alboglabra, *Brassica oleracea* Botrytis, *Brassica oleracea* Capitata, *Brassica oleracea* Gemmifera, *Brassica oleracea* Gongylodes, and *Brassica oleracea* Italica; preferably the plant is white cabbage.

5. The fibre-containing composition according to any one of the preceding claims, wherein the composition comprises at least 40 wt% of dietary fibre, preferably of from 45 wt% to 85 wt% of dietary fibre, as compared of the dry weight of the composition.

6. The fibre-containing composition according to any one of the preceding claims, wherein the composition comprises at most 30 wt% of digestible carbohydrates, preferably of from 5 wt% to 25 wt% of digestible carbohydrates, as compared of the dry weight of the composition.

7. The fibre-containing composition according to any one of the preceding claims, wherein the composition comprises of from 0.5 wt% to 15 wt% of protein, as compared of the dry weight of the composition.

8. A process for the preparation of one or more products from biomaterial of a plant of the species *Brassica oleracea,* wherein said one or more products are selected from the group consisting of a fibre-containing composition, a digestible-carbohydrate-containing composition, and a protein-containing composition, wherein protein in said one or more products is in its native form; wherein said process comprises the steps of:
(a) providing said biomaterial; wherein the biomaterial essentially consists of leaves;
(b) preparing an aqueous slurry having a pH in a range of from 7.5 to 8.5 from said biomaterial; and
(c) subjecting the aqueous slurry to separation so as to obtain a liquid fraction and a solid fraction; wherein the solid fraction is a fibre-containing composition;
wherein said steps (b) and (c) are carried out at a temperature in a range of from 0°C to 20°C;
and wherein the process optionally further comprises the steps of
(d) subjecting the solid fraction obtained in step (c) to one or more additional washing steps so as to obtain one or more liquid fractions and a solid fraction, wherein the solid fraction is a fibre-containing composition, and the one or more liquid fractions are digestible-carbohydrate-containing compositions;
(e) subjecting the liquid fraction obtained in step (c), the one or more liquid fractions obtained in step (d), and/or combinations thereof, to acidification so as to obtain an acid-treated liquid;
(f) subjecting the acid-treated liquid obtained in step (e) to separation so as to obtain an aqueous process liquid and a liquid gel, wherein the aqueous process liquid is a digestible-carbohydrate-containing composition and the liquid gel is a protein-containing composition;
(g) removing salt ions from the aqueous process liquid obtained in step (f) so as to obtain a low-salt aqueous process liquid; wherein the low-salt aqueous process liquid is a digestible-carbohydrate-containing composition; and/or
(h) subjecting the fibre-containing composition, the digestible-carbohydrate-containing composition, and/or the protein-containing composition to one or more concentration and/or drying steps so as to obtain one or more dry products.

9. The process according to claim 8, wherein step (b) comprises the steps of:
(b 1) optionally contacting said biomaterial with water;
(b2) subjecting said biomaterial to a mechanical treatment selected from the group consisting of disrupting, homogenization, and a combination thereof; and
(b3) contacting said biomaterial with a basic substance under mixing;
wherein steps (b 1), (b2), and (b3) can be carried out in any order or simultaneously.

10. The process according to any one of claims 8 to 9, wherein the plant of the species *Brassica oleracea* is selected from the group consisting of *Brassica oleracea* Acephala, *Brassica oleracea* Viridis, *Brassica oleracea* Alboglabra, *Brassica oleracea* Botrytis, *Brassica oleracea* Capitata, *Brassica oleracea* Gemmifera, *Brassica oleracea* Gongylodes, and *Brassica oleracea* Italica; preferably the plant is white cabbage.

11. The process according to any one of claims 8 to 10, wherein said process comprises steps (a)-(c), (e), and (f); wherein preferably in step (e) the acid-treated liquid has a pH of at most 6, more preferably a pH in a range of from 4 to 5.

12. A protein-containing composition obtainable from biomaterial of a plant of the species *Brassica oleracea* by the process according to any one of claims 8 to 11, wherein said process comprises steps (a)-(c), (e), and (f), and preferably step (h), wherein the protein-containing composition is subjected to one or more concentration and/or drying steps;
wherein the biomaterial essentially consists of leaves; and
wherein the protein in the protein-containing composition is in its native form.

13. A digestible-carbohydrate-containing composition obtainable from biomaterial of a plant of the species *Brassica oleracea* by the process according to any one of claims 8 to 10, wherein said process comprises steps (a)-(c), and said process further comprises step (d), and/or steps (e) and (f);
wherein preferably said process further comprises step (g),
wherein preferably said process further comprises step (h), wherein the digestible-carbohydrate-containing composition is subjected to one or more concentration and/or drying steps;
wherein the biomaterial essentially consists of leaves;
wherein the digestible-carbohydrate-containing composition comprises at most 30 wt% of protein as compared of the dry weight of the composition; and
wherein the protein is in its native form.

14. Use of a composition according to any one of claims 1-7, 12, or 13 in feed or food.

## Patentansprüche

1. Faserhaltige Zusammensetzung, erhältlich aus Biomaterial einer Pflanze der Spezies *Brassica oleracea* durch ein Verfahren, umfassend die Schritte von:
(a) Bereitstellung des Biomaterials;
(b) Herstellung einer wässrigen Aufschlämmung mit einem pH-Wert im Bereich von 7,5 bis 8,5 aus dem Biomaterial; und
(c) Unterziehen der wässrigen Aufschlämmung einer Trennung, um einen flüssigen Anteil und einen festen Anteil zu erhalten;
wobei der feste Anteil die faserhaltige Zusammensetzung ist;
wobei die Schritte (b) und (c) bei einer Temperatur im Bereich von 0°C bis 20°C durchgeführt werden;
wobei das Biomaterial im Wesentlichen aus Blättern besteht;
wobei die faserhaltige Zusammensetzung höchstens 30 Gew.-% Protein, bezogen auf das Trockengewicht der Zusammensetzung, umfasst; und wobei das Protein in seiner nativen Form vorliegt.

2. Faserhaltige Zusammensetzung nach Anspruch 1, wobei Schritt (b) des Verfahrens die Schritte umfasst von:
(b1) optional Inkontaktbringen des Biomaterials mit Wasser;
(b2) Unterziehen des Biomaterials einer mechanischen Behandlung, ausgewählt aus der Gruppe bestehend aus Aufschließen, Homogenisieren und einer Kombination davon; und
(b3) Inkontaktbringen des Biomaterials mit einer Grundsubstanz durch Mischen;
wobei die Schritte (b1), (b2) und (b3) in beliebiger Reihenfolge oder gleichzeitig durchgeführt werden können.

3. Faserhaltige Zusammensetzung nach einem der vorhergehenden Ansprüche, wobei das Verfahren ferner den Schritt von:
(d) Unterziehen des in Schritt (c) erhaltenen festen Anteils einem oder mehreren zusätzlichen Waschschritten, um einen oder mehrere flüssige Anteile und einen festen Anteil zu erhalten, wobei der feste Anteil eine faserhaltige Zusammensetzung ist und der eine oder die mehreren flüssigen Anteile verdauliche, kohlenhydrathaltige Zusammensetzungen sind.

4. Faserhaltige Zusammensetzung nach einem der vorhergehenden Ansprüche, wobei die Pflanze der Spezies *Brassica oleracea* ausgewählt ist aus der Gruppe bestehend aus *Brassica oleracea* Acephala, *Brassica oleracea* Viridis, *Brassica oleracea* Alboglabra, *Brassica oleracea* Botrytis, *Brassica oleracea* Capitata, *Brassica oleracea* Gemmifera, *Brassica oleracea* Gongylodes, und *Brassica oleracea* Italica; vorzugsweise ist die Pflanze Weißkohl.

5. Faserhaltige Zusammensetzung nach einem der vorhergehenden Ansprüche, wobei die Zusammensetzung mindestens 40 Gew.-% Ballaststoffe, vorzugsweise 45 bis 85 Gew.-% Ballaststoffe, bezogen auf das Trockengewicht der Zusammensetzung, umfasst.

6. Faserhaltige Zusammensetzung nach einem der vorhergehenden Ansprüche, wobei die Zusammensetzung höchstens 30 Gew.-% verdauliche Kohlenhydrate, vorzugsweise von 5 Gew.-% bis 25 Gew.-% verdauliche Kohlenhydrate, bezogen auf das Trockengewicht der Zusammensetzung, umfasst.

7. Faserhaltige Zusammensetzung nach einem der vorhergehenden Ansprüche, wobei die Zusammensetzung von 0,5 Gew.-% bis 15 Gew.-% Protein, bezogen auf das Trockengewicht der Zusammensetzung, umfasst.

8. Verfahren zur Herstellung eines oder mehrerer Produkte aus Biomaterial einer Pflanze der Spezies *Brassica oleracea,* wobei das eine oder die mehreren Produkte ausgewählt werden aus der Gruppe bestehend aus einer faserhaltigen Zusammensetzung, einer verdaulichen kohlenhydrathaltigen Zusammensetzung und einer proteinhaltigen Zusammensetzung, wobei das Protein in dem einen oder den mehreren Produkten in seiner nativen Form vorliegt; wobei das Verfahren die Schritte umfasst von:
(a) Bereitstellung des besagten Biomaterials; wobei das Biomaterial im Wesentlichen aus Blättern besteht;
(b) Herstellung einer wässrigen Aufschlämmung mit einem pH-Wert im Bereich von 7,5 bis 8,5 aus dem Biomaterial; und
(c) Unterziehen der wässrigen Aufschlämmung einer Trennung, um einen flüssigen und einen festen Anteil zu erhalten; wobei der feste Anteil eine faserhaltige Zusammensetzung ist;
wobei die Schritte (b) und (c) bei einer Temperatur im Bereich von 0°C bis 20°C durchgeführt werden;
und wobei das Verfahren optional weiter die Schritte umfasst von:
(d) Unterziehen des in Schritt (c) erhaltenen festen Anteils einem oder mehreren zusätzlichen Waschschritten, um einen oder mehrere flüssige Anteile und einen festen Anteil zu erhalten, wobei der feste Anteil eine faserhaltige Zusammensetzung ist und der eine oder die mehreren flüssigen Anteile verdauliche, kohlenhydrathaltige Zusammensetzungen sind;
(e) Unterziehen des in Schritt (c) erhaltenen flüssigen Anteils, des in Schritt (d) erhaltenen einen oder der mehreren flüssigen Anteile und/oder Kombinationen davon, einem Ansäuern, um eine säurebehandelte Flüssigkeit zu erhalten;
(f) Unterziehen der in Schritt (e) erhaltenen säurebehandelten Flüssigkeit einer Trennung, um eine wässrige Prozessflüssigkeit und ein flüssiges Gel zu erhalten, wobei die wässrige Prozessflüssigkeit eine verdauliche kohlenhydrathaltige Zusammensetzung ist und das flüssige Gel eine proteinhaltige Zusammensetzung ist;
(g) Entfernen von Salzionen aus der in Schritt (f) erhaltenen wässrigen Prozessflüssigkeit, um eine salzarme wässrige Prozessflüssigkeit zu erhalten; wobei die salzarme wässrige Prozessflüssigkeit eine verdauliche, kohlenhydrathaltige Zusammensetzung ist; und/oder
(h) Unterziehen der faserhaltigen Zusammensetzung, der verdaulichen kohlenhydrathaltigen Zusammensetzung und/oder der proteinhaltigen Zusammensetzung einem oder mehreren Konzentrations- und/oder Trocknungsschritten, um ein oder mehrere Trockenprodukte zu erhalten.

9. Verfahren nach Anspruch 8, wobei Schritt (b) die Schritte umfasst von:
(b1) optional Inkontaktbringen des Biomaterials mit Wasser;
(b2) Unterziehen des Biomaterials einer mechanischen Behandlung, ausgewählt aus der Gruppe bestehend aus Aufschließen, Homogenisieren und einer Kombination davon; und
(b3) Inkontaktbringen des Biomaterials mit einer Grundsubstanz durch Mischen;
wobei die Schritte (b1), (b2) und (b3) in beliebiger Reihenfolge oder gleichzeitig durchgeführt werden können.

10. Verfahren nach einem der Ansprüche 8 bis 9, wobei die Pflanze der Spezies Brassica oleracea ausgewählt wird aus der Gruppe bestehend aus Brassica *oleracea* Acephala, *Brassica oleracea* Viridis, *Brassica oleracea* Alboglabra, *Brassica oleracea* Botrytis, *Brassica oleracea* Capitata, *Brassica oleracea* Gemmifera, *Brassica oleracea* Gongylodes, und *Brassica oleracea* Italica; vorzugsweise ist die Pflanze Weißkohl.

11. Verfahren nach einem der Ansprüche 8 bis 10, wobei das Verfahren die Schritte (a)-(c), (e) und (f) umfasst; wobei vorzugsweise in Schritt (e) die säurebehandelte Flüssigkeit einen pH-Wert von höchstens 6, vorzugsweise einen pH-Wert im Bereich von 4 bis 5 aufweist.

12. Proteinhaltige Zusammensetzung, erhältlich aus Biomaterial einer Pflanze der Spezies *Brassica oleracea* durch das Verfahren nach einem der Ansprüche 8 bis 11, wobei das Verfahren die Schritte (a)-(c), (e) und (f) und vorzugsweise Schritt (h) umfasst, wobei die proteinhaltige Zusammensetzung einem oder mehreren Konzentrations- und/oder Trocknungsschritten unterzogen wird;
wobei das Biomaterial im Wesentlichen aus Blättern besteht; und
wobei das Protein in der proteinhaltigen Zusammensetzung in seiner nativen Form vorliegt.

13. Verdauliche, kohlenhydrathaltige Zusammensetzung, erhältlich aus Biomaterial einer Pflanze der Spezies *Brassica oleracea* durch das Verfahren nach einem der Ansprüche 8 bis 10, wobei das Verfahren die Schritte (a)-(c) umfasst und das Verfahren ferner Schritt (d) und/oder die Schritte (e) und (f) umfasst;
wobei das Verfahren vorzugsweise ferner den Schritt (g) umfasst,
wobei das Verfahren vorzugsweise ferner den Schritt (h) umfasst, wobei die verdauliche, kohlenhydrathaltige Zusammensetzung einem oder mehreren Konzentrations- und/oder Trocknungsschritten unterzogen wird;
wobei das Biomaterial im Wesentlichen aus Blättern besteht;
wobei die verdauliche, kohlenhydrathaltige Zusammensetzung höchstens 30 Gew.-% Protein bezogen auf das Trockengewicht der Zusammensetzung umfasst; und
wobei das Protein in seiner nativen Form vorliegt.

14. Verwendung einer Zusammensetzung nach einem der Ansprüche 1 bis 7, 12 oder 13 in Futter- oder Lebensmitteln.

## Revendications

1. Composition contenant des fibres, pouvant être obtenue à partir d'un biomatériau d'une plante de l'espèce *Brassica oleracea* par un procédé comprenant les étapes de :
(a) fourniture dudit biomatériau ;
(b) préparation d'une bouillie aqueuse ayant un pH situé dans la plage allant de 7,5 à 8,5 à partir dudit biomatériau ; et
(c) soumission de la bouillie aqueuse à une séparation de façon que soient obtenues une fraction liquide et une fraction solide ;
dans laquelle la fraction solide est ladite composition contenant des fibres ;
dans laquelle lesdites étapes (b) et (c) sont effectuées à une température située dans la plage allant de 0°C à 20°C ;
dans laquelle le biomatériau consiste essentiellement en feuilles ;
laquelle composition contenant des fibres comprend au plus 30 % en poids de protéines par rapport au poids sec de la composition ; et
dans laquelle lesdites protéines sont sous leur forme native.

2. Composition contenant des fibres selon la revendication 1, dans laquelle l'étape (b) du procédé comprend les étapes de :
(b1) éventuellement mise en contact dudit biomatériau avec de l'eau ;
(b2) soumission dudit biomatériau à un traitement mécanique choisi dans le groupe constitué par une dislocation, une homogénéisation, et une combinaison de celles-ci ; et
(b3) mise en contact dudit biomatériau avec une substance basique dans des conditions de mélange ;
dans laquelle les étapes (b1), (b2) et (b3) peuvent être effectuées dans n'importe quel ordre ou simultanément.

3. Composition contenant des fibres selon l'une quelconque des revendications précédentes, dans laquelle le procédé comprend en outre l'étape de :
(d) soumission de la fraction solide obtenue dans l'étape (c) à une ou plusieurs étapes de lavage additionnelles de façon que soient obtenues une ou plusieurs fractions liquides et une fraction solide, dans laquelle la fraction solide est une composition contenant des fibres, et la ou les fractions liquides sont des compositions contenant des hydrates de carbone digestibles.

4. Composition contenant des fibres selon l'une quelconque des revendications précédentes, dans laquelle la plante de l'espèce *Brassica oleracea* est choisie dans le groupe constitué par *Brassica oleracea* Acephala, *Brassica oleracea* Viridis, *Brassica oleracea* Alboglabra, *Brassica oleracea* Botrytis, *Brassica oleracea* Capitata, *Brassica oleracea* Gemmifera, *Brassica oleracea* Gongylodes, et *Brassica oleracea* Italica ; de préférence la plante est le chou blanc.

5. Composition contenant des fibres selon l'une quelconque des revendications précédentes, laquelle composition comprend au moins 40 % en poids de fibres alimentaires, de préférence 45 % en poids à 85 % en poids de fibres alimentaires, par rapport au poids sec de la composition.

6. Composition contenant des fibres selon l'une quelconque des revendications précédentes, laquelle composition comprend au plus 30 % en poids d'hydrates de carbone digestibles, de préférence 5 % en poids à 25 % en poids d'hydrates de carbone digestibles, par rapport au poids sec de la composition.

7. Composition contenant des fibres selon l'une quelconque des revendications précédentes, laquelle composition comprend 0,5 % en poids à 15 % en poids de protéines, par rapport au poids sec de la composition.

8. Procédé pour la préparation d'un ou plusieurs produits issus de biomatériau d'une plante de l'espèce *Brassica oleracea,* dans lequel lesdits un ou plusieurs produits sont choisis dans le groupe constitué par une composition contenant des fibres, une composition contenant des hydrates de carbone digestibles, et une composition contenant des protéines, dans lequel les protéines dans lesdits un ou plusieurs produits sont sous leur forme native ; lequel procédé comprend les étapes de :
(a) fourniture dudit biomatériau ; dans laquelle le biomatériau consiste essentiellement en feuilles ;
(b) préparation d'une bouillie aqueuse ayant un pH situé dans la plage allant de 7,5 à 8,5 à partir dudit biomatériau ; et
(c) soumission de la bouillie aqueuse à une séparation de façon que soient obtenues une fraction liquide et une fraction solide ; dans laquelle la fraction solide est une composition contenant des fibres ;
dans lequel lesdites étapes (b) et (c) sont effectuées à une température située dans la plage allant de 0°C à 20°C ;
et lequel procédé comprend éventuellement en outre les étapes de :
(d) soumission de la fraction solide obtenue dans l'étape (c) à une ou plusieurs étapes de lavage additionnelles de façon que soient obtenues une ou plusieurs fractions liquides et une fraction solide, dans laquelle la fraction solide est une composition contenant des fibres, et la ou les fractions liquides sont des compositions contenant des hydrates de carbone digestibles ;
(e) soumission de la fraction liquide obtenue dans l'étape (c), de la ou des fractions liquides obtenues dans l'étape (d), et/ou de leurs combinaisons, à une acidification de façon que soit obtenu un liquide traité par un acide ;
(f) soumission du liquide traité par un acide obtenu dans l'étape (e) à une séparation de façon que soit obtenu un liquide de procédé aqueux et un gel liquide, dans laquelle le liquide de procédé aqueux est une composition contenant des hydrates de carbone digestibles et le gel liquide est une composition contenant des protéines ;
(g) retrait des ions sels hors du liquide de procédé aqueux obtenu dans l'étape (f) de façon que soit obtenu un liquide de procédé aqueux à faible teneur en sel ; dans lequel le liquide de procédé aqueux à faible teneur en sel est une composition contenant des hydrates de carbone digestibles ; et/ou
(h) soumission de la composition contenant des fibres, de la composition contenant des hydrates de carbone digestibles et/ou de la composition contenant des protéines à une ou plusieurs étapes de concentration et/ou de séchage de façon que soient obtenus un ou plusieurs produits secs.

9. Procédé selon la revendication 8, dans lequel l'étape (b) comprend les étapes de :
(b1) éventuellement mise en contact dudit biomatériau avec de l'eau ;
(b2) soumission dudit biomatériau à un traitement mécanique choisi dans le groupe constitué par une dislocation, une homogénéisation, et une combinaison de celles-ci ; et
(b3) mise en contact dudit biomatériau avec une substance basique dans des conditions de mélange ;
dans lequel les étapes (b1), (b2) et (b3) peuvent être effectuées dans n'importe quel ordre ou simultanément.

10. Procédé selon l'une quelconque des revendications 8 et 9, dans lequel la plante de l'espèce *Brassica oleracea* est choisie dans le groupe constitué par *Brassica oleracea* Acephala, *Brassica oleracea* Viridis, *Brassica oleracea* Alboglabra, *Brassica oleracea* Botrytis, *Brassica oleracea* Capitata, *Brassica oleracea* Gemmifera, *Brassica oleracea* Gongylodes, et *Brassica oleracea* Italica ; de préférence la plante est le chou blanc.

11. Procédé selon l'une quelconque des revendications 8 à 10, lequel procédé comprend les étapes (a) à (c), (e), et (f) ; dans lequel de préférence dans l'étape (e) le liquide traité par un acide a un pH d'au plus 6, mieux encore un pH situé dans la plage allant de 4 à 5.

12. Composition contenant des protéines pouvant être obtenue à partir d'un biomatériau d'une plante de l'espèce *Brassica oleracea* par le procédé selon l'une quelconque des revendications 8 à 11, dans laquelle ledit procédé comprend les étapes (a) à (c), (e), et (f), et de préférence l'étape (h), laquelle composition contenant des protéines est soumise à une ou plusieurs étapes de concentration et/ou de séchage ;
dans laquelle le biomatériau consiste essentiellement en feuilles ; et
dans laquelle les protéines dans la composition contenant des protéines sont sous leur forme native.

13. Composition contenant des hydrates de carbone digestibles pouvant être obtenue à partir d'un biomatériau d'une plante de l'espèce *Brassica oleracea* par le procédé selon l'une quelconque des revendications 8 à 10, dans laquelle ledit procédé comprend les étapes (a) à (c), et ledit procédé comprend en outre l'étape (d) et/ou les étapes (e) et (f) ;
dans laquelle de préférence ledit procédé comprend en outre l'étape (g),
dans laquelle de préférence ledit procédé comprend en outre l'étape (h), dans laquelle ladite composition contenant des hydrates de carbone digestibles est soumise à une ou plusieurs étapes de concentration et/ou de séchage ;
dans laquelle le biomatériau consiste essentiellement en feuilles ;
dans laquelle la composition contenant des hydrates de carbone digestibles comprend au plus 30 % en poids de protéines par rapport au poids sec de la composition ; et
dans laquelle les protéines sont sous leur forme native.

14. Utilisation d'une composition selon l'une quelconque des revendications 1 à 7, 12 et 13, dans un aliment ou un aliment pour animaux.
